# EUROPEAN PATENT SPECIFICATION

(11) **EP 4 102 811 B1**
(45) Date of publication and mention of the grant of the patent: **29.04.2026**
(21) Application number: 21753682.0
(22) Date of filing: 08.02.2021
(51) Int. Cl.: H04M 1/72427, H04N 23/69, H04M 1/72403

(54) **GUIDE MAP PROVISION METHOD AND ELECTRONIC DEVICE FOR SUPPORTING SAME**
FÜHRUNGSKARTENBEREITSTELLUNGSVERFAHREN UND ELEKTRONISCHE VORRICHTUNG ZUR UNTERSTÜTZUNG DAVON
PROCÉDÉ DE FOURNITURE DE CARTE DE GUIDAGE ET DISPOSITIF ÉLECTRONIQUE LE PRENANT EN CHARGE

(30) Priority: 10.02.2020 KR 20200015889
(43) Date of publication of application: 14.12.2022
(60) Divisional application: 26167129.1
(73) Proprietor: Samsung Electronics Co., Ltd., Suwon-si, Gyeonggi-do 16677 (KR)
(72) Inventor: HWANG, Taehee, Suwon-si Gyeonggi-do 16677 (KR); PARK, Dongkook, Suwon-si Gyeonggi-do 16677 (KR); PARK, Joonil, Suwon-si Gyeonggi-do 16677 (KR); LEE, Jaehan, Suwon-si Gyeonggi-do 16677 (KR)
(74) Representative: HGF
(86) International application number: PCT/KR2021/001643
(87) International publication number: WO 2021/162381

(56) References cited:
- EP-A2- 2 207 342
- KR-A- 20170 029 837
- KR-A- 20180 031 239
- KR-B1- 101 622 599
- KR-B1- 101 643 606
- US-A1- 2007 098 396
- US-A1- 2016 353 012

## Description

### [Technical Field]

Various embodiments of the disclosure relate to a method of providing a guide map, and an electronic device supporting the method.

### [Background Art]

An electronic device such as a smart phone may enlarge or reduce a preview image displayed on a display. For example, the electronic device may enlarge or reduce the preview image displayed on the display, based on one of a plurality of magnifications.
EP 2 207 342 A1 relates to a mobile terminal and camera image control method thereof.
US 2007/0098396 A1 relates to an electronic camera detecting a person's face from an object image by photographing an object.
KR 101 622 599 A1 relates to mobile terminal controlling a zoomed image.

### [Disclosure of Invention]

### [Technical Problem]

However, when the electronic device shakes (e.g., when a hand tremor is detected) in a situation where the preview image is enlarged by at least a designated magnification (e.g., 20.0x magnification), a phenomenon may occur in which an area other than an area intended to be enlarged is displayed on the display. For example, when the electronic device shakes slightly (e.g., 3mm) in a state where the preview image is enlarged by 100 magnification, another area outside the area originally intended to be enlarged may be disposed on the display.

Various embodiments of the disclosure may provide a method of providing a guide map and an electronic device supporting the method, so that the guide map is provided to display which part of an enlarged preview image displayed on a display corresponds to an image obtained through a camera, when the electronic device shakes in a situation where the preview image is enlarged by at least a designated magnification.

### [Technical Solution]

The invention is defined by the independent claims. Further aspects of the invention are outlined in the dependent claims. When the term "embodiment" is used for describing an unclaimed combination of features, it has to be understood as referring to examples useful for understanding the present invention. An electronic device according to an embodiment of the disclosure may include a display, a camera, and a processor. The processor may be configured to display, on the display, a first image obtained through the camera, display, in response to the first image being enlarged by one magnification in a designated first magnification range, the enlarged first image as a second image, display, in a designated area of the display, a guide map including a first guide box indicating a location of the second image and having a size which varies in response to a magnification change in the first magnification range, and when the first image or the second image is enlarged to a third image in response to the first image or the second image being enlarged by one magnification in a designated second magnification range greater than the first magnification range, change the first guide box to a second guide box having a fixed size. The second guide box may indicate a location of the third image on the guide map.

An electronic device according to an embodiment of the disclosure may include a display, a sensor, a camera, and a processor. The processor may be configured to display, on the display, a first image obtained from the camera, enlarge the first image by one magnification in a first magnification range, and upon detecting shaking of the electronic device through the sensor while the first image is enlarged by one magnification in the first magnification range, display a guide map in a designated area of the display.

In addition, a method of providing a guide map according to an embodiment of the disclosure may include displaying, on a display, a first image obtained from a camera of an electronic device, displaying, in response to the first image being enlarged by one magnification in a designated first magnification range, the enlarged first image as a second image, displaying, in a designated area of the display, a guide map including a first guide box indicating a location of the second image and having a size which varies in response to a magnification change in the first magnification range, and when the first image or the second image is enlarged to a third image in response to the first image or the second image being enlarged by one magnification in a designated second magnification range greater than the first magnification range, change the first guide box to a second guide box having a fixed size. The second guide box may indicate a location of the third image on the guide map.

### [Advantageous Effects of Invention]

According to various embodiments of the disclosure, when an electronic device shakes in a situation where a preview image is enlarged by at least a designated magnification, a guide map indicating a location of the preview image enlarged and displayed on a display is provided to identify whether the preview image displayed on the display is a preview image intended to be enlarged.

In addition, according to various embodiments of the disclosure, when an area of a preview image enlarged and displayed on a display is a different area outside an area originally intended to be enlarged, a graphic effect may be applied to a guide map, which indicates a location of an area currently displayed on the display and a location of the area intended to be enlarged, thereby providing a guide to display on the display the area of the preview image intended to be enlarged.

In addition thereto, various effects which are directly or indirectly understood through the disclosure may be provided.

### [Brief Description of Drawings]

FIG. 1 is a block diagram of an electronic device in a network environment according to various embodiments of the disclosure;
FIG. 2 is a block diagram of an electronic device which provides a guide map according to an embodiment of the disclosure;
FIG. 3 is a diagram for describing a method of providing a guide map, according to an embodiment of the disclosure;
FIG. 4 is a diagram for describing another method of providing a guide map, according to an embodiment of the disclosure;
FIG. 5 is a diagram for describing a method of providing a guide map, based on a zoom magnification, according to an embodiment of the disclosure;
FIG. 6 is a diagram for describing a type of a guide box, according to an embodiment of the disclosure;
FIG. 7 is a diagram for describing another type of a guide box, according to an embodiment of the disclosure;
FIG. 8 is a diagram for describing a method of matching a guide box, according to an embodiment of the disclosure;
FIG. 9 is a diagram for describing a method of re-designating a location of a guide box, according to an embodiment of the disclosure;
FIG. 10 is a diagram for describing a method of applying a second graphic effect to a display, according to an embodiment of the disclosure;
FIG. 11 is a diagram for describing a method of determining a size of a guide map, according to an embodiment of the disclosure; and
FIG. 12 is a diagram for describing a method of adjusting a size of a guide map, according to an embodiment of the disclosure.

### [Mode for Carrying out the Invention]

Hereinafter, various embodiments of the disclosure will be described in detail with reference to the accompanying drawings. Components shown in the drawings may be exaggerated or reduced in size for convenience of explanation, and the disclosure is not necessarily limited thereto.

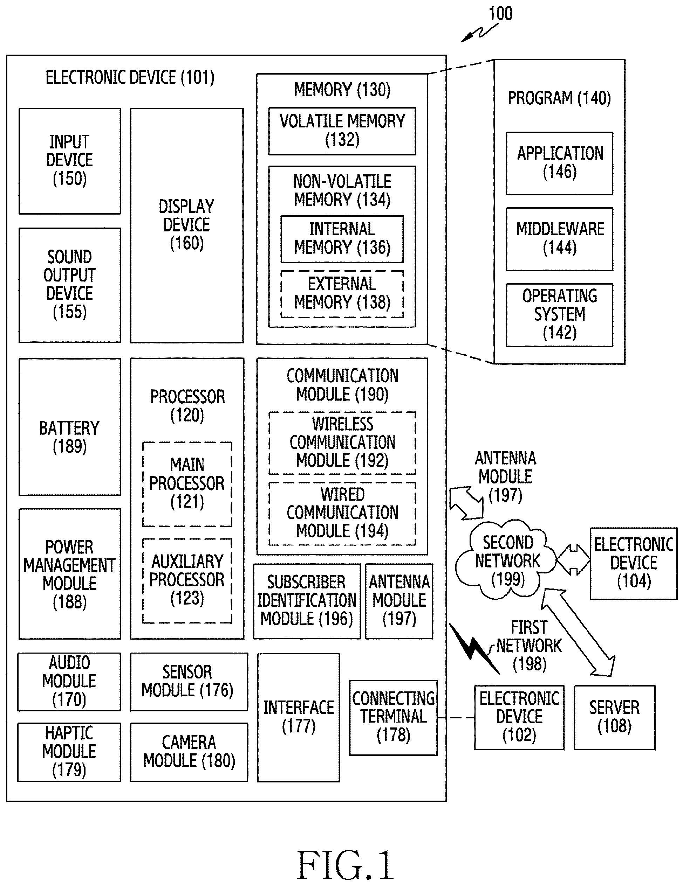

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

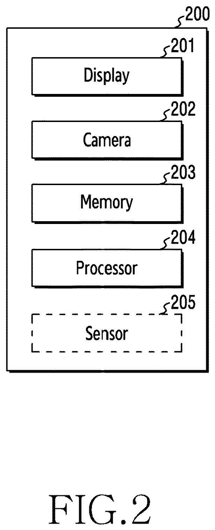

FIG. 2 is a block diagram of an electronic device which provides a guide map according to an embodiment of the disclosure.

Referring to FIG. 2, an electronic device 200 (e.g., the electronic device 101 of FIG. 1) may display image data obtained through a camera 202 (e.g., the camera module 180 of FIG. 1) on a display as a first preview image (e.g., a first image). In addition, the electronic device 200 may enlarge or reduce the first preview image, based on one magnification in a first magnification range. The electronic device may display the first preview image, enlarged based on one magnification in the first magnification range, as a second preview image (e.g., a second image) through a display 201. In response to the first preview image being enlarged by one magnification in the first magnification range, the electronic device 200 may display, in a designated area of the display, a guide map indicating a location of the second preview image displayed through the display 201. The first magnification range may be 0.5x to 89.9x. The first magnification range is not designated, and may be changed in a process of designing the electronic device 200. The electronic device 200 may display on the guide map a first guide box indicating a location of the enlarged second previous image. The electronic device 200 may enlarge the second preview image to a third preview image (e.g., a third image), based on one magnification in a second magnification range. The second magnification range may be 90.x to 100.0x. The second magnification range is not designated, and may be changed in the process of designing the electronic device 200. The electronic device 200 may change the first guide box to a second guide box having a fixed size while the second preview image is enlarged to the third preview image. The electronic device 200 may display a location of the third preview image through the second guide box.

The electronic device 200 may include at least one of a smart phone, a laptop, a form factor, a wearable device, an AR/VR device, and a car (automotive electronics), and is not limited thereto as long as it is a device which enlarges the first preview image (e.g., an image) according to one of a plurality of magnification ranges or one magnification therein and displays a guide map indicating a location of the enlarged first preview image.

The electronic device 200 may include the display 201 (e.g., the display device 160 of FIG. 1), the camera 202 (e.g., the camera module 180 of FIG. 1), a memory 203 (e.g., the memory 130 of FIG. 1), a processor 204 (e.g., the processor 120 of FIG. 1), and a sensor 205 (e.g., the sensor module 176 of FIG. 1). However, the structure of the electronic device 200 is not limited thereto. According to an embodiment, the electronic device 200 may omit at least one of the aforementioned components, and may include at least one of other components. For example, the electronic device 200 may include a communication module (e.g., the communication module 190 of FIG. 1).

According to an embodiment, when the electronic device 200 enlarges the first preview image by at least a specific magnification or when movement or shaking (or a hand tremor) occurs in the electronic device 220, the enlarged first preview image may be displayed as the second preview image through the display. The electronic device 200 may display a guide map indicating a location of the second preview image in a designated area of the display 201. For example, the electronic device 200 may display image data obtained through the camera 202 as the first preview image on the display 201. The electronic device 200 may enlarge the first preview image according to one of a plurality of magnification ranges. When the first preview image is enlarged based on one magnification in the first magnification range, the electronic device 200 may display a guide map indicating a location of some areas of the enlarged first preview image in a designated area of the display 201. As another example, the electronic device 200 may detect the shaking through the sensor 205, in a situation where the first preview image is enlarged based on one of the plurality of magnification ranges. The electronic device 200 which has detected the shaking may display the guide map on the designated area of the display 201.

According to another embodiment, when the movement or the shaking (or the hand tremor) occurs while the electronic device 200 enlarges the first preview image by at least on the specific magnification, the electronic device 200 may display the guide map indicating the location of the second preview image on the designated area of the display 201. For example, the electronic device 200 may display image data obtained through the camera 202 as the first preview image on the display 201. When the movement or the shaking occurs while the electronic device 200 enlarges the first preview image displayed on the display 201 by at least 20x magnification, the electronic device 200 may display the first preview image, which is enlarged based on the magnification in the guide map, as the second preview image on the display 210. The electronic device may display the guide map indicating the location of the second preview image in a designated area.

The display 201 may display image data, which is obtained by the electronic device 200 through the camera 202, in at least some areas as the first preview image. The display 201 may display not only an image or video obtained through the camera 202 but also a variety of content (e.g., text, image, video, icon, symbol, or the like) obtained through a wired/wireless network. The display 201 may include a touchscreen. For example, a touch, gesture, proximity, or hovering input using a body part of a user who wants to enlarge or reduce at least some areas of the first preview image being displayed may be received.

The camera 202 may capture an image or video including a plurality of objects or subjects.

The memory 203 may store a variety of data used by at least one component of the electronic device 200. According to an embodiment, the memory 203 may store information on the image or video captured through the camera 202. In addition, the memory 203 may store information related to a graphic effect to be applied to the image and video and information related to a priority of the subject.

The processor 204 may control at least one of other components of the electronic device 200, and may process or operate a variety of data. According to an embodiment, the processor 204 may display image data obtained through the camera 202 as the first preview image on the display 201. The processor 204 may enlarge or reduce the first preview image displayed on the display 201, based on one magnification in the plurality of magnification ranges.

According to an embodiment, the processor 204 may enlarge or reduce the first preview image displayed through the display 201, based on one magnification in the first magnification range. When one of the plurality of magnification ranges or one magnification in the first magnification range is greater than or equal to a designated value (e.g., 20.0x magnification) while the first preview image is enlarged to the second preview image, the processor 204 may display a guide map in a designated area of the display 201. While the second preview image is displayed, the processor 204 may display the first guide box, which indicates the location of the second preview image, on the guide map. The processor 204 may enrage the second preview image to the third preview image, based on one magnification in the second magnification range. When the second preview image is enlarged to the third preview image, the processor 204 may change the first guide box, which indicates the location of the second preview image on the guide map, to the second guide box having a fixed size. The processor 204 may display a location of the third preview image through the second guide box.

According to an embodiment, the processor 204 may enlarge the first preview image, which is displayed through the display 201, to the second preview image, based on one magnification in the first magnification range. For example, the processor 204 may enlarge the first preview image to the second preview image, based on 50.0x magnification in the first magnification range. When a magnification of the first preview image to be enlarged is greater than or equal to a designated value (e.g., 20.0x magnification) or is one of the plurality of magnification ranges, the processor 204 may display a guide map in a designated area of the display 201. The processor 204 may display the first guide box indicating the location of the second preview image on the guide map.

According to an embodiment, the processor 204 may enlarge the second preview image to the third preview image (e.g., the third image), based on one magnification in the first magnification range. When the second preview image is enlarged to the third preview image, the processor may allow the first guide box, which indicates the location of the second preview image on the guide map, to indicate the location of the third preview image.

That is, the processor 204 may display the first guide box on the guide map, based on one magnification in the first magnification range, and may display the second guide box on the guide map, based on one magnification in the second magnification range. The plurality of magnification ranges are not limited to the first magnification range and the second magnification range, and the magnification range may be added or decreased in a process of designing the electronic device 200.

According to an embodiment, the processor 204 may display the first guide box and the second guide box on the guide map. Since the preview image displayed on the display 201 through the first guide box and the second guide box is enlarged or reduced based on one magnification in the plurality of magnification ranges, the processor 204 may display, on the guide map, a location of the preview image displayed on the display 201. The first guide box may change in size, based on the magnification of the preview image displayed on the display 201. When the preview image is enlarged based on one magnification in the second magnification range, the second guide box is a fixed-sized guide box displayed on the guide map and may be changed to at least one of a plurality of icons. For example, the second guide box may be displayed as icons having various shapes such as a heart shape, a circle shape, and a star shape, but is not limited thereto.

In addition, the electronic device 200 may include the sensor 205. The processor 204 may use the sensor 205 to determine whether the electronic device 200 moves or shakes (a hand tremor). The sensor 205 may include at least one of a gyro sensor and an acceleration sensor, and is not limited thereto as long as it is possible to determine whether the electronic device 200 shakes.

The processor 204 may use the sensor 205 to determine whether the electronic device 200 shakes. For example, the processor 204 may determine whether the electronic device 200 shakes (e.g., moves), based on data output from the sensor 205. The processor 204 may enlarge the first preview image, which is displayed on the display 201 in a state where the electronic device 200 shakes, to the second preview image, based on one magnification in the first magnification range or one of a plurality of magnification ranges. When one magnification in the first magnification range is a designated value (e.g., 20.0x magnification) or the first preview image is enlarged based on one of the plurality of magnification ranges, a guide map may be displayed in a designated area of the display 201 in a state where the electronic device shakes. The processor 204 may display the first guide box, which indicates a location of the second preview image, on the guide map.

According to an embodiment, when the processor 204 detects the shaking of the electronic device 200 through the sensor 205, the second preview image may be enlarged to the third preview image, based on one magnification in the second magnification range. While changing the first guide box, which indicates the location of the second preview image on the guide map, to the second guide box having a fixed size, the processor 204 may allow the guide box to indicate a location of the third preview image.

As described above, according to an embodiment, an electronic device (e.g., the electronic device 101 of FIG. 1 or the electronic device 200 of FIG. 2) may include a display (e.g., the display device 160 of FIG. 1 or the display 201 of FIG. 2), a camera (e.g., the camera module 180 of FIG. 1 or the camera module 202 of FIG. 2), and a processor (e.g., the processor 120 of FIG. 1 or the processor 204 of FIG. 2). The processor may be configured to display, on the display, a first image obtained through the camera, display, in response to the first image being enlarged in one magnification in a designated first magnification range, the enlarged first image as a second image, display, in a designated area of the display, a guide map including a first guide box indicating a location of the second image and having a size which varies in response to a magnification change in the first magnification range, and when the first image or the second image is enlarged to a third image in response to the first image or the second image being enlarged by one magnification in a designated second magnification range greater than the first magnification range, change the first guide box to a second guide box having a fixed size. The second guide box may indicate a location of the third image on the guide map.

According to an embodiment, the processor may be configured to display, through the guide map, the same image as the first image which is a preview image of an image or video obtained through the camera.

According to an embodiment, the guide map may include a central fixed type in which at least one of the first and second guide boxes is fixed to a central area on the guide map, and a location variable type in which a location on the guide map is changed.

According to an embodiment, the second guide box may be displayed on the guide map by being changed to one of a plurality of icons.

According to an embodiment, the electronic device may further include a sensor (e.g., the sensor module 176 of FIG. 1 or the sensor 205 of FIG. 2) which senses shaking of the electronic device. The processor may be configured to obtain, through the sensor, direction information related to a direction in which the electronic device shakes and distance information related to a distance in which the electronic device shakes.

According to an embodiment, the processor may be configured to set, in response to the image being enlarged by one magnification in the first magnification range or the second magnification range, the first image to be enlarged as a designated image to be displayed on the display, and in response to the image being enlarged by one magnification in the first magnification range or the second magnification range, when the enlarged first image is an image different from the designated image, compare priorities of an object included in the designated image and an object included in the different image, based on object priority information, and display, on the display, an image including a higher-priority object.

According to an embodiment, the processor may be configured to apply a first graphic effect, which distinguishes the designated image from each of the different images, on the guide map.

According to an embodiment, the processor may be configured to, when the different image other than the designated image is enlarged, in response to the image being enlarged by one magnification in the first magnification range or the second magnification range, notify that the first image to be enlarged is the different image, and display, in at least some areas of the display, at least one of a text, an icon, and a second graphic effect to induce a focus to move to the designated image originally intended to be enlarged.

According to an embodiment, the processor may be configured to, when in a state where the different image is spaced apart by at least a designated distance from the designated image or when the different image is displayed on the display during a designated time, re-set the different image as the designated image to be displayed on the display.

According to an embodiment, the processor may be configured to, upon detecting a user input for controlling a size or location of the guide box, change the size and location of the guide map in response to the detected user input.

According to an embodiment, the processor may be configured to adjust a size and proportion of the guide map displayed in the designated area, so as to correspond to a size of at least some areas of the display on which the first image is displayed.

According to an embodiment, an electronic device (e.g., the electronic device 101 of FIG. 1 or the electronic device 200 of FIG. 2) may include a display (e.g., the display device 160 of FIG. 1 or the display 201 of FIG. 2), a sensor (e.g., the sensor module 176 of FIG. 1 or the sensor 205 of FIG. 2), a camera (e.g., the camera module 180 of FIG. 1 or the camera module 202 of FIG. 2), and a processor (e.g., the processor 120 of FIG. 1 or the processor 204 of FIG. 2). The processor may be configured to display, on the display, a first image obtained from the camera, enlarge the first image by one magnification in a first magnification range, and upon detecting shaking of the electronic device through the sensor while the first image is enlarged by one magnification in the first magnification range, display a guide map in a designated area of the display.

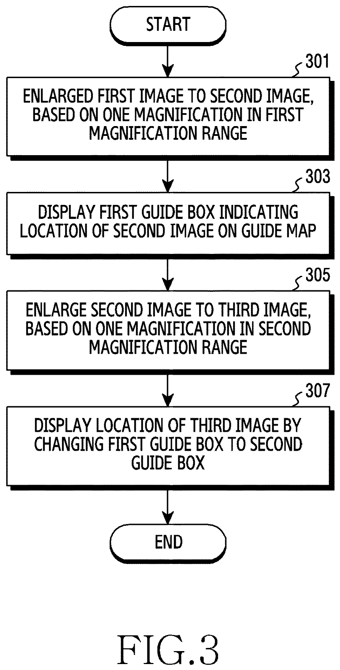

FIG. 3 is a diagram for describing a method of providing a guide map, according to an embodiment of the disclosure.

Referring to FIG. 3, in operation 301, a processor (e.g., the processor 120 of FIG. 1 or the processor 204 of FIG. 2) of an electronic device (e.g., the electronic device 101 of FIG. 1 or the electronic device 200 of FIG. 2) may enlarge a first preview image (e.g., the first preview image of FIG. 2) being displayed through a display (e.g., the display device 160 of FIG. 1 or the display device 201 of FIG. 2), based on one magnification in a first magnification range. When the first preview image is enlarged based on one magnification in the first magnification range or one of a plurality of magnification ranges, the processor may identify whether the magnification of the enlarged first preview image is greater than or equal to a value (e.g., 40.0x magnification) designated to one magnification in the first magnification range or is one of the plurality of magnification ranges.

In operation 303, when the magnification of the first preview image is equal to or greater than the designated value or is one of the plurality of magnification ranges, the processor may display the guide map in a designated area of the display. The processor may display a first guide box indicating a location of a second preview image on the guide map while enlarging the first preview image to the second preview image. The first guide box is a guide box, which indicates the location of the second preview image on the guide map displaying the same image as the first preview image, on the image, and a size thereof may vary based on one magnification in the first magnification range.

In operation 305, the processor may enlarge the second preview image to a third preview image, based on one magnification in a second magnification range. The processor may display the second preview image enlarged based on one magnification in the second magnification range as the third preview image through the display.

In operation 307, the processor may change the first guide box indicating the location of the second preview image to a second guide box having a fixed size, while enlarging the second preview image to the third preview image. The processor may display the second guide box indicating a location of the third preview image on the guide map displaying the same image as the first preview image.

According to an embodiment, the processor may enlarge the first preview image displayed on the display to the second preview image, based on 40.0x magnification in the first magnification range. Since the first preview image is enlarged by at least 20.0x magnification (a designated value), the processor may display a guide map in a designated area of the display. The processor may display the first guide box indicating the location of the second preview image on the guide map. The first guide box may change in size, based on one magnification in the first magnification range.

According to an embodiment, when one magnification in the second magnification range is 100.0x magnification, the processor may change the first guide box, which indicates the location of the second preview image on the guide map, to the second guide box having the fixed size. The processor may display the location of the third preview image through the second guide box. The processor may display the second guide box having the fixed size as at least one of a plurality of icons. The plurality of icons may have various shapes such as a star shape, a heart shape, and a circle shape, but the disclosure is not limited thereto.

In addition, as described above, according to an embodiment, a method of providing a guide map may include displaying, on a display (e.g., the display device 160 of FIG. 1 or the display 201 of FIG. 2), a first image obtained from a camera (e.g., the camera module 180 of FIG. 1 or the camera 202 of FIG. 2) of an electronic device (e.g., the electronic device 101 of FIG. 1 or the electronic device 200 of FIG. 2), displaying, in response to the first image being enlarged in one magnification in a designated first magnification range, the enlarged first image as a second image, displaying, in a designated area of the display, a guide map including a first guide box indicating a location of the second image and having a size which varies in response to a magnification change in the first magnification range, and when the first image or the second image is enlarged to a third image in response to the first image or the second image being enlarged by one magnification in a designated second magnification range greater than the first magnification range, change the first guide box to a second guide box having a fixed size. The second guide box may indicate a location of the third image on the guide map.

According to an embodiment, the displaying of the guide map in the designated area further may include displaying, through the guide map, the same image as the first image which is a preview image of an image or video obtained through the camera.

According to an embodiment, the displaying of the guide map may further include displaying, in the designated area, one of a central fixed type guide map in which at least one of the first and second guide boxes is fixed to a central area on the guide map and a location variable type guide map in which a location on the guide map is changed.

According to an embodiment, the electronic device may further include a sensor (e.g., the sensor module 176 of FIG. 1 or the sensor 205 of FIG. 2) which senses shaking of the electronic device. The method may further include obtaining, through the sensor, direction information related to a direction in which the electronic device shakes and distance information related to a distance in which the electronic device shakes.

According to an embodiment, the method may further include setting, in response to the image being enlarged by one magnification in the first magnification range or the second magnification range, the first image to be enlarged as a designated image to be displayed on the display, and in response to the image being enlarged by one magnification in the first magnification range or the second magnification range, when the enlarged first image is an image different from the designated image, comparing priorities of an object included in the designated image and an object included in the different image, based on object priority information, and displaying, on the display, an image including a higher-priority object.

According to an embodiment, the method may further include, when the different image other than the designated image is enlarged, in response to the image being enlarged by one magnification in the first magnification range or the second magnification range, notifying that the first image to be enlarged is the different image, and displaying, in at least some areas of the display, at least one of a text, an icon, and a second graphic effect to induce a focus to move to the designated image originally intended to be enlarged.

According to an embodiment, the method may further include adjusting a size and proportion of the guide map displayed in the designated area, so as to correspond to a size of at least some areas of the display on which the first image is displayed.

According to an embodiment, the method may further include, when in a state where the different image is spaced apart by at least a designated distance from the designated image or when the different image is displayed on the display during a designated time, re-setting the different image as the designated image to be displayed on the display.

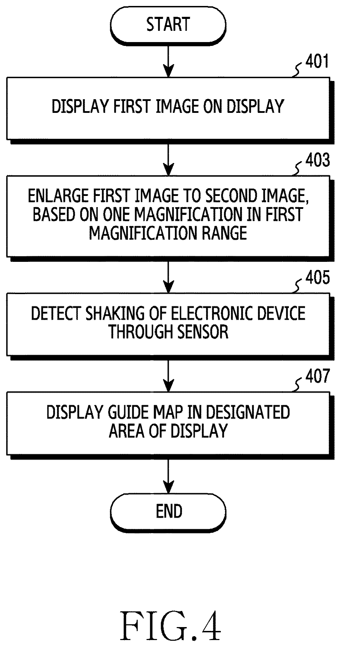

FIG. 4 is a diagram for describing another method of providing a guide map, according to an embodiment of the disclosure.

Referring to FIG. 4, in operation 401, a processor (e.g., the processor 120 of FIG. 1 or the processor 204 of FIG. 2) of an electronic device (e.g., the electronic device 101 of FIG. 1 or the electronic device 200 of FIG. 2) may enlarge a first preview image (e.g., the first preview image of FIG. 2) being displayed through a display (e.g., the display device 160 of FIG. 1 or the display device 201 of FIG. 2), based on one magnification in a first magnification range. When the first preview image is enlarged based on one magnification in the first magnification range, the processor may use a sensor (e.g., the sensor module 176 of FIG. 1 or the sensor 205 of FIG. 2) to detect shaking of the electronic device. The sensor may include at least one of a gyro sensor and an acceleration sensor, and the disclosure is not limited thereto as long as the sensor is able to detect the shaking of the electronic device and identify a distance and direction in which the electronic device shakes.

In operation 401, the processor may display an image obtained through a camera (e.g., the camera module 180 of FIG. 1 or the camera 202 of FIG. 2) on the display as the first preview image.

In operation 403, the processor may enlarge the first preview image to a second preview image, based on one magnification in the first magnification range. The processor may display the second preview image in at least some areas of the display.

In operation 405, when the first preview image is enlarged to the second preview image, the processor may detect whether the electronic device shakes.

In operation 407, when the first preview image is enlarged to the second preview image in a state where the electronic device shakes, the processor may display the guide map in a designated area of the display.

According to an embodiment, when the first preview image is enlarged to the second preview image, based on one magnification in the first magnification range, the processor may display the guide map if the first preview image is enlarged by a magnification greater than or equal to a designated value in a state where the electronic device shakes. According to another embodiment, the processor may display the guide map even if one magnification in the first magnification range in which the first preview image is enlarged in the state where the electronic device shakes is less than the designated value.

According to an embodiment, the processor of the electronic device may enlarge the first preview image displayed on the display to the second preview image, based on 40.0 magnification in the first magnification range. When the first preview image is enlarged based on the 40.0x magnification, the processor may detect movement or shaking (a hand tremor) of the electronic device through the sensor. In addition, the processor may identify whether the 40.0x magnification is greater than or equal to a designated value. The processor may display the guide map in a designated area of the display, when the first preview image is enlarged to the second preview image, based on the 40.0x magnification which is greater than or equal to the designated value, in a state where the electronic device shakes. The processor may display a first guide box indicating a location of the second preview image on the guide map. The first guide box may be displayed inside the guide map displaying the same image as the first preview image.

According to an embodiment, the processor may enlarge the second preview image to a third preview image, based on one magnification (e.g., 100.0x magnification) of a second magnification range. When the second preview image is enlarged to the third preview image, the processor may change the first guide box, which indicates the location of the second preview image on the guide map, to a second guide box having a fixed size. The processor may display a location of the third preview image through the second guide box. According to various embodiments, the processor may display the second guide box having the fixed size as at least one of a plurality of icons.

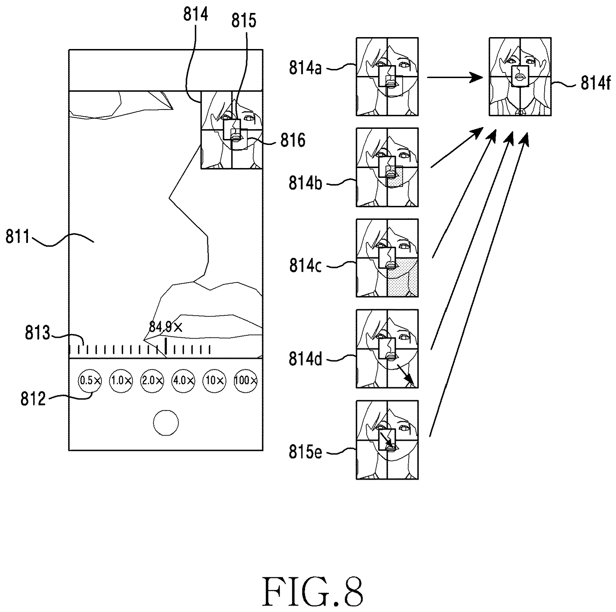

According to an embodiment, the processor may use the sensor to obtain direction information related to a direction in which the electronic device shakes and distance information related to a distance in which the electronic device shakes. Based on the distance information and the direction information, the processor may identify the second preview image enlarged from the first preview image, based on one magnification in the first magnification range, when the electronic device is not shaken. Detailed descriptions related thereto will be described with reference to FIG. 8.

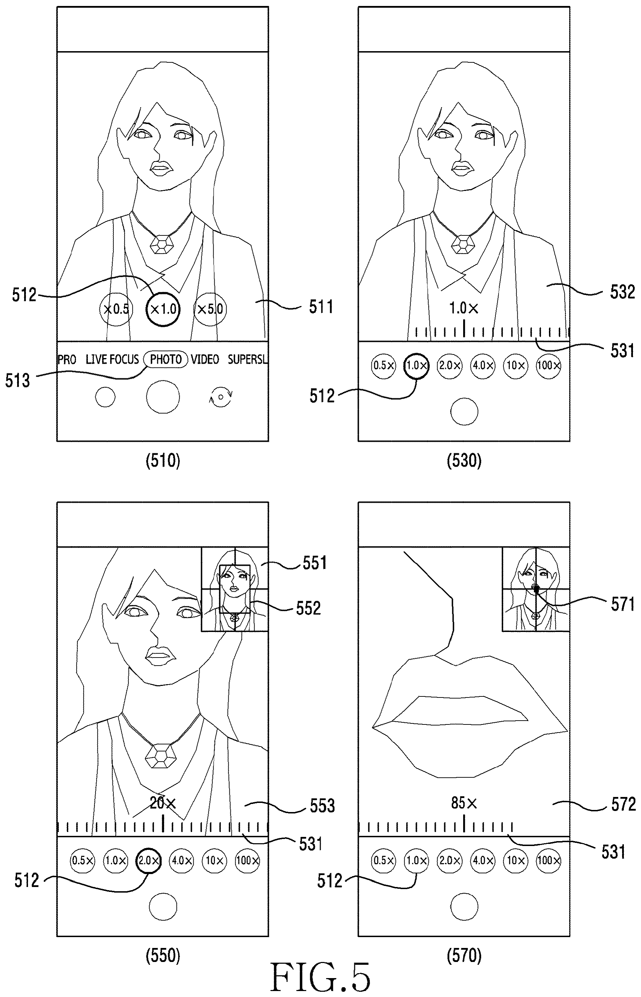

FIG. 5 is a diagram for describing a method of providing a guide map, based on a zoom magnification, according to an embodiment of the disclosure.

Referring to FIG. 5, in a state 510, an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image 511. A processor (e.g., the processor 120 of FIG. 1 or the processor 204 of FIG. 2) of the electronic device may enlarge the first preview image (e.g., the first preview image of FIG. 2) being displayed on the display to a second preview image 532, based on one magnification in a first magnification range.

According to an embodiment, the processor may display an icon related to a live focus mode, photo mode, and video mode for selecting which file format is used to obtain image data obtained through the camera, and may display icons for obtaining the image data in various file formats through the display. In addition, the processor may display icons 512 matched to at least one of a plurality of magnifications in at least some areas of the display. When the processor responds to an input for selecting an icon related to 1.0x magnification from among the icons matched to the magnification, the first preview image 511 may be enlarged by 1.0x magnification as in a state 530.

In the state 530, the processor may enlarge the first preview image 511 to the second preview image 532, based on one magnification in the first magnification range. When the magnification of the second preview image 532 is less than a designated value, the processor does not display the guide map in a designated area of the display. The processor displays an object 531 indicating a plurality of magnifications with a specific interval in a designated area of the display while the first preview image 511 is displayed through the display by being enlarged by 1.0x magnification. When an input occurs on the object 531 indicating the plurality of magnifications with the specific interval, the processor may enlarge or reduce the first preview image 511, in response to the input. In addition, the processor may display the icons 512 matched to the plurality of magnifications in at least some areas of the display.

According to an embodiment, the processor may enlarge the first preview image 511 to the second preview image 532, based on the 1.0x magnification in the first magnification range. When the first preview image 511 is enlarged to the second preview image 532, the processor may determine whether the 1.0x magnification is greater than or equal to a designated value (10.0x). The processor may not display the guide map in the designated area of the display if the 1.0x magnification is less than the designated value.

In a state 550, the processor may enlarge the second preview image 532 to a third preview image 553, based on one magnification in the first magnification range. When the second preview image 532 is enlarged to the third preview image 553, based on one magnification in the first magnification range, the processor may determine whether the magnification of the third preview image 553 is greater than or equal to a designated value. If the magnification of the third preview image 553 is greater than or equal to the designated value, the processor displays a guide map 551 in a designated area of the display. The processor displays a first guide box 552 indicating a location of the third preview image 553 on the guide map 551.

According to an embodiment, the processor may enlarge the second preview image 532 to the third preview image 553, based on 20.0x magnification in the first magnification range. When the second preview image 532 is enlarged to the third preview image 553, the processor may identify whether the 20.0x magnification is greater than or equal to the designated value (10.0x). The processor may display the guide map 551 in a designated area of the display if the magnification of the third preview image 553 is greater than or equal to the designated value. The processor may display, on the guide map 551, the first guide box 552 indicating the location of the third preview image 553 currently displayed on the display. The first guide box 552 may change in size, based on one magnification in the first magnification range.

In a state 570, the processor may enlarge the third preview image 553 to a fourth preview image 572, based on one magnification in a second magnification range. When the third preview image 553 is enlarged to the fourth preview image 572, based on one magnification in the second magnification range, the processor may change the first guide box 552, which indicates the location of the third preview image 553 on the guide map 551, to a second guide box 571. The processor may display a location of the fourth preview image 572 on the guide map 551 through the second guide box 571.

According to an embodiment, the processor may enlarge the third preview image 553 to the fourth preview image 572, based on 85.0x magnification in the second magnification range. When the third preview image 553 is enlarged to the fourth preview image 572, the processor may change a shape of the first guide box 552, which indicates the location of the third preview image 553 on the guide map 551, to a shape of the second guide box 571. The processor may display the location of the fourth preview image 572 on the guide map 551 through the second guide box 571. The second guide box 571 may be changed to at least one of a plurality of icons.

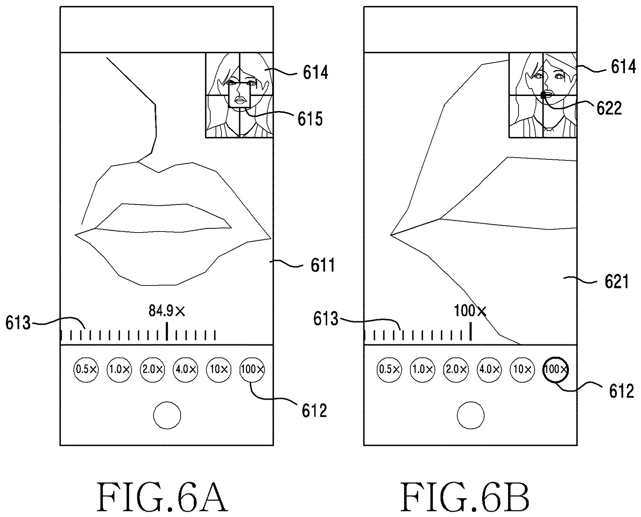

FIG. 6 is a diagram for describing a type of a guide box, according to an embodiment of the disclosure.

Referring to FIG. 6A, a processor (e.g., the processor 120 of FIG. 1 or the processor 204 of FIG. 2) of an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image (e.g., the first preview image 511 of FIG. 5). The processor may enlarge the first preview image to a second preview image 611 (e.g., the second preview image 532 of FIG. 5), based on one magnification in a first magnification range.

In an embodiment, the processor may enlarge the first preview image displayed on the display to the second preview image 611, based on one magnification in the first magnification range. When the first preview image is enlarged to the second preview image 611, the processor may determine whether one magnification in the first magnification range is greater than or equal to a designated value. When one magnification in the first magnification range is greater than or equal to the designated value, the processor may display a guide map 614 (e.g., the guide map 551 of FIG. 5) in a designated area of the display. The processor may display a first guide box 615 indicating a location of the second preview image 611 on the guide map 614. The guide box 615 may change in size, based on one magnification in the first magnification range.

In addition, the processor may display icons 612 matched to one magnification in a plurality of magnification ranges (e.g., the icons 512 matched to at least one magnification in the plurality of magnification ranges of FIG. 5) in at least some areas of the display. When the processor responds to an input for selecting an icon related to 5.0x magnification from among icons matched to the magnification, the first preview image may be enlarged by 5.0x magnification. The processor may display an object 613 indicating a plurality of magnifications with a specific interval in a designated area of the display (e.g., the object 531 indicating the plurality of magnifications with the specific interval) while the first preview image is displayed through the display by being enlarged by the 5.0x magnification. When an input occurs on the object 613 indicating the plurality of magnifications with the specific interval, the processor may enlarge or reduce the first preview image, in response to the input.

The first guide box 615 is fixed at a central location of the guide map 614. The guide map 614 may display the same image as the first preview image. Since the first guide box 615 is fixed at the central location of the guide map 614, the processor may control a location of an image displayed on the guide map 614 to display some areas of the image included in the first guide box 615 on the display. The first guide box 615 may be changed based on one magnification in the first magnification range.

Referring to FIG. 6B, the processor may enlarge the second preview image 611 to a third preview image 621, based on one magnification in the second magnification range.

According to an embodiment, when the second preview image 611 is enlarged to the third preview image 621, the processor may change a shape of the first guide box 615 displaying the second preview image 611 on the guide map 614 to a shape of a second guide box 622. The processor may display a location of the third preview image 621 through the second guide box 622 on the guide map 614.

The first guide box 615 and the second guide box 622 may be fixed at a central location of the guide map 614. The guide map 614 may display the same image as the first preview image. Since the first guide box 615 and the second guide box 622 are fixed at the central location of the guide map 614, the processor may control a location of an image displayed on the guide map 614 to display some areas of the image included or overlapping in the first guide box 615 and the second guide box 622 on the display.

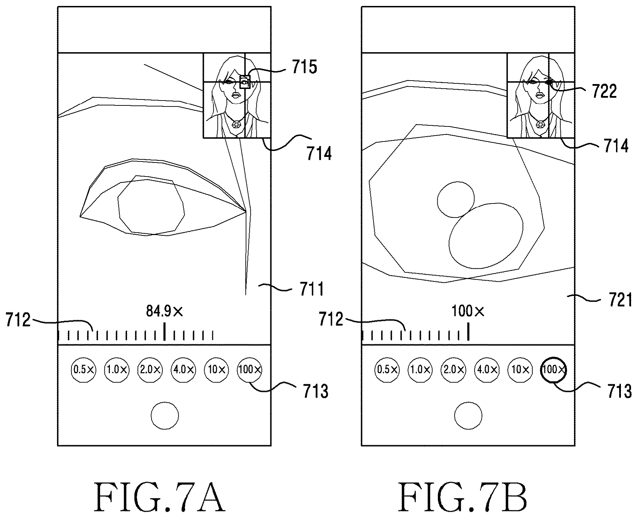

FIG. 7 is a diagram for describing another type of a guide box, according to an embodiment of the disclosure.

Referring to FIG. 7A, a processor (e.g., the processor 120 of FIG. 1 or the processor 204 of FIG. 2) of an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image (e.g., the first preview image 511 of FIG. 5). The processor may enlarge the first preview image to a second preview image 711 (e.g., the second preview image 532 of FIG. 5), based on one magnification in a first magnification range.

In an embodiment, the processor may enlarge the first preview image displayed on the display to the second preview image 711, based on one magnification in the first magnification range. When the first preview image is enlarged to the second preview image 711, the processor may determine whether one magnification in the first magnification range is greater than or equal to a designated value. When one magnification in the first magnification range is greater than or equal to the designated value, the processor may display a guide map 714 (e.g., the guide map 551 of FIG. 5) in a designated area of the display. The processor may display a first guide box 715 indicating a location of the second preview image 711 on the guide map 714. The guide box 715 may change in size, based on one magnification in the first magnification range.

The first guide box 715 may change in location on the guide map 714. The processor may allow some areas of the same image as the first preview image displayed on the guide map 714 to be included in the first guide box 715, while changing a location of the first guide box 715. The processor may display a portion corresponding to some areas of the image included in the first guide box 715 on the display. The first guide box 715 may be changed based on one magnification in the first magnification range.

In addition, the processor may display icons 712 matched to one magnification in a plurality of magnification ranges (e.g., the icons 512 matched to at least one magnification in the plurality of magnification ranges of FIG. 5) in at least some areas of the display. When the processor responds to an input for selecting an icon related to 5.0x magnification from among icons matched to the magnification, the first preview image may be enlarged by 5.0x magnification. The processor may display an object 713 indicating a plurality of magnifications with a specific interval in a designated area of the display (e.g., the object 531 indicating the plurality of magnifications with the specific interval) while the first preview image is displayed through the display by being enlarged by the 5.0x magnification. When an input occurs on the object 713 indicating the plurality of magnifications with the specific interval, the processor may enlarge or reduce the first preview image, in response to the input.

Referring to FIG. 7B, the processor may enlarge the second preview image 711 to a third preview image 721, based on one magnification in a second magnification range.

According to an embodiment, when the second preview image 711 is enlarged to the third preview image 721, the processor may change a shape of the first guide box 715 displaying the second preview image 711 on the guide map 714 to a shape of a second guide box 722. The processor may display a location of the third preview image 721 through the second guide box 722 on the guide map 714.

The processor may change the location of the second guide box 722 located on the guide map 714. The guide map 714 may display the same image as the first preview image. When the processor changes the location of the second guide box 722 on the guide map 714, some areas of the image overlapping with the second guide box 722 may be displayed on the display.

FIG. 8 is a diagram for describing a method of matching a guide box, according to an embodiment of the disclosure.

Referring to FIG. 8, a processor (e.g., the processor 120 of FIG. 1 or the processor 204 of FIG. 2) of an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image (e.g., the first preview image 511 of FIG. 5).

According to an embodiment, the processor may display a plurality of icons 812 matched to one of a plurality of magnifications (e.g., the icons 512 matched to at least one of the plurality of magnifications of FIG. 5) on the display, while displaying the first preview image on the display. When an input occurs on at least one of the icons 812 matched to the one magnification, the processor may enlarge or reduce the first preview image, in response to the input.

According to an embodiment, the processor may display an object 813 indicating the plurality of magnifications with a specific interval (e.g., the object 531 indicating the plurality of magnifications with the specific interval of FIG. 5) in at least some areas of the display, while displaying the icons 812 matched to at least one of the plurality of magnifications. When an input occurs on the object 813 indicating the plurality of magnifications with the specific interval, the processor may enlarge or reduce the first preview image, in response to the input. In addition, the processor may display a text indicating a numerical value of the determined zoom magnification in at least some areas of the display.

According to an embodiment, the processor may use a sensor (e.g., the sensor 205 of FIG. 2) to detect movement or shaking (a hand tremor) of the electronic device. The processor may enlarge the first preview image to a second preview image 811 (e.g., the second preview image 532 of FIG. 5), based on 84.9x magnification in a first magnification range. When the first preview image is enlarged to the second preview image 811, based on the 84.9x magnification, the processor may detect the shaking of the electronic device through the sensor.

According to an embodiment, when the first preview image is enlarged to the second preview image 811, based on the 84.9x magnification, if the shaking occurs in the electronic device, the processor may display a guide map 814 (e.g., the guide map 551 of FIG. 5) displaying the same image as the first preview image in a designated area of the display. The processor may classify the second preview image 811 enlarged by the 84.9x magnification in a state where the electronic device shakes as a different image other than a designated image to be displayed on the display.

According to an embodiment, the processor may use the sensor to obtain direction information related to a direction in which the electronic device moves or shakes and distance information related to a distance in which the electronic device moves or shakes. The processor may identify a designated image, based on information on one magnification in the first magnification range of the second preview image 811, an area of the second preview 811 enlarged by the 84.9x magnification, the direction information, and the distance information. The designated image may be the preview image originally intended to be enlarged by the processor with the 84.9x magnification in a state where the electronic device shakes.

The processor may apply a first graphic effect to first guide boxes 815 and 816 displaying the different image and designated image displayed on the guide map 814. The processor may match the first guide box 815 displaying the different image to the first guide box 816 displaying the designated image on the guide map 814 (see 814f). When the first guide box 815 displaying the different image is matched to the first guide box 816 displaying the designated image, the processor may display, through the display, the second preview image corresponding to the designated image and enlarged based on the 84.9x magnification in the first magnification range in a state where the electronic device does not shake. The first graphic effect may be a graphic effect for guiding the matching of the different image to the designated image in the guide map 814.

According to an embodiment, the processor may display the first guide box 815 or 816 displaying the different image and the designated image by differently applying color thereto (see 814a). The processor may fill color inside the first guide box 816 displaying the designated image (see 814b). The processor may apply color to a direction in which the first guide box 816 displaying the designated image is located in at least some areas of the second preview image (see 810c). The processor may apply a graphic effect for guiding the matching of the different image to the designated image inside the first guide box 815 displaying the different image or the first guide box 816 displaying the designated image (see 810d or 810e).

According to an embodiment, the processor may enlarge the first preview image displayed on the display to the second preview image 811, based on the 84.9x magnification in the first magnification range. The processor may detect the shaking of the electronic device through the sensor while determining that the first preview image is enlarged by at least 20.0x magnification (a designated value).

According to an embodiment, when the electronic device shakes, if the first preview image is enlarged based on the 84.9x magnification, the processor may display the guide map 814 displaying the same image as the first preview image on the designated area of the display.

According to an embodiment, when the electronic device shakes, if the first preview image is enlarged to the second preview image 811, based on the 84.9x magnification, the processor may display the first guide box 815 displaying the different image inside the guide map 814.

According to an embodiment, the processor may use the sensor to obtain direction information related to a direction in which the electronic device moves or shakes and distance information related to a distance in which the electronic device moves or shakes, and the disclosure is not limited thereto as long as it is possible to obtain information for identifying the designated image through the sensor.

According to an embodiment, when the processor enlarges the first preview image to the second preview image, based on 100.0x magnification in a second magnification range, the sensor may be used to detect that the electronic device shakes to the right by 4mm. The processor may identify that the different image which is the second preview image enlarged based on the 100.0x magnification corresponds to an area located spaced apart by 40cm to the left from the designated image which is the preview image enlarged by 100.0 magnification when the electronic devices does not shake. Therefore, the processor which has identified the designated image may apply the first graphic effect to the first guide box 815 indicating the location of the different image and the first guide box 816 indicating the location of the designated image in the guide map 814, and may match the first guide box 815 indicating the location of the different images to the first guide box 816 indicating the location of the designated image.

According to an embodiment, when the first guide box 815 displaying the different image and the first guide box 816 indicating the location of the designated image have a center fixed type, the processor may induce movement such that at least some areas of the same image as the preview image displayed inside the guide map are included inside the first guide box 816 indicating the location of the designated image.

According to an embodiment, when the first guide box 815 displaying the different image and the first guide box 816 displaying the designated image have a variable location type, the processor may induce the first guide box 815 displaying the different image displayed on the guide map to move to an area in which the first guide box 815 displaying the designated image is located. When the first guide box 815 displaying the different image is located at the same location as the second guide box 815 displaying the designated image, the processor may display the designated image on the display.

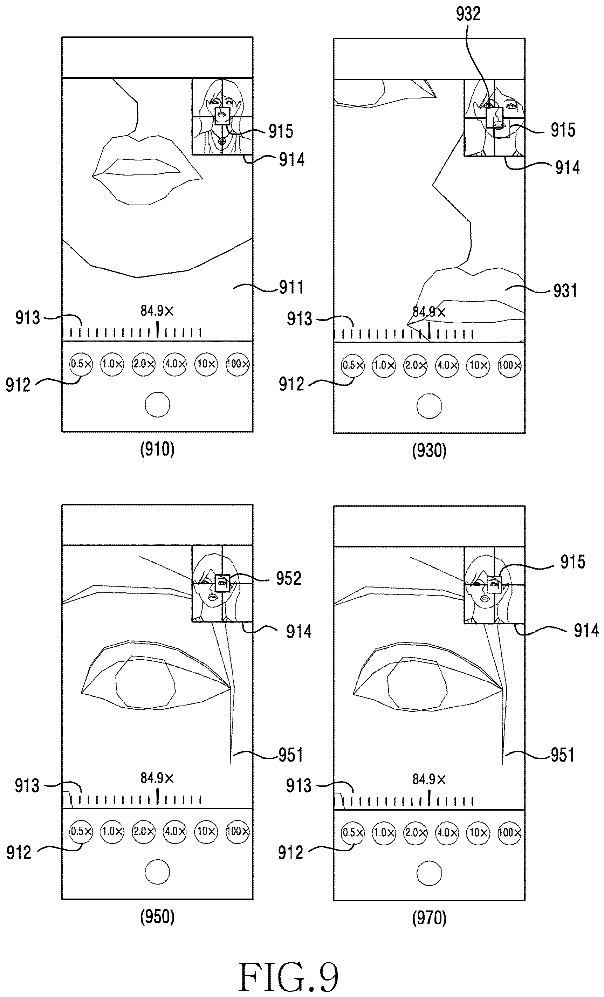

FIG. 9 is a diagram for describing a method of re-designating a location of a guide box, according to an embodiment of the disclosure.

Referring to FIG. 9, a processor (e.g., the processor 120 of FIG. 1 or the processor 204 of FIG. 2) of an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image (e.g., the first preview image 511 of FIG. 5).

According to an embodiment, the processor may display a plurality of icons 912 matched to one of a plurality of magnifications (e.g., the icons 512 matched to at least one of the plurality of magnifications of FIG. 5) on the display, while displaying the first preview image on the display. When an input occurs on at least one of the icons 912 matched to the one magnification, the processor may enlarge or reduce the first preview image, in response to the input.

According to an embodiment, the processor may display an object 913 indicating the plurality of magnifications with a specific interval (e.g., the object 531 indicating the plurality of magnifications with the specific interval of FIG. 5) in at least some areas of the display, while displaying the icons 812 matched to at least one of the plurality of magnifications. When an input occurs on the object 913 indicating the plurality of magnifications with the specific interval, the processor may enlarge or reduce the preview image, in response to the input. In addition, the processor may display a text indicating a numerical value of the determined zoom magnification in at least some areas of the display.

According to an embodiment, in a state 910, the processor may set a second preview image 911, which is enlarged based on one magnification in a first magnification range or a second magnification range, as a designated image to be displayed on the display. When the processor sets the second preview image 911 as the designated image, a first guide box 915 indicating a location of the designated image may be displayed on a guide map 914 displaying the same image as the first preview image. The processor may change color by applying a first graphic effect to the first guide box 915 indicating the location of the designated image.

In a state 930, when the first preview image is enlarged based on 84.9x magnification in the first magnification range in a state where the electronic device shakes, if an image displayed on the display is a third preview image 931, the processor may determine that a different image other than the designated image (the second preview image 911) is enlarged. The processor may display a first guide box 932 indicating a location of the enlarged third preview image 931 on the guide map 914.

According to an embodiment, if it is not a state where the enlarged third preview image 931 and the designated image (the second preview image 911) are spaced apart by at least a designated distance, the processor may not update the first graphic effect applied to the first guide box 915 indicating the location of the designated image displayed on the guide map 914 and the first guide box 932 indicating the location of the different image (the third preview image).

According to an embodiment, when the enlarged different image is displayed through the display for a designated time, the processor may update the first graphic effect by inducing the first guide box 915 indicating the location of the designated image displayed on the guide map 914 to move to an area in which the first guide box 932 indicating the location of the different image (the third preview image 931) is located, and then may re-designate the preview image to be enlarged and displayed on the display.

In a state 950, the processor may enlarge another different image which is a fourth preview image 951, based on one magnification in the plurality of magnification ranges. When the processor enlarges the different image (e.g., the fourth preview image 951), a distance to a designated image which is the second preview image 911 set to the image to be displayed on the display in the state 910 may be compared.

In a state 970, when the different image is spaced apart by at least a designated distance from the designated image, the processor may update the first graphic effect by inducing the first guide box 915 indicating the location of the designated image (the second preview image 911) to move to an area in which the first guide box 952 indicating the location of the different image (the fourth preview image 951) is located. The processor may update the first graphic effect to re-set the different image as the designated image to be displayed on the display.

According to an embodiment, when the second preview image 911 is set as the designated image to be displayed on the display, the processor may determine whether a subject (object) having a high priority exists in the designated image (e.g., the second preview image 911), based on information related to a priority of the subject (object) stored in a memory (e.g., the memory 203 of FIG. 2). The processor may extract a feature point of the subject (object) to detect the subject (object), and may identify a priority of the detected subject (object), based on information related to the priority of the subject (object). The information related to the priority is classified into the same category as person, expression, animal, and object, and may be information related to the priority of subject (object) included in each of the categories.

According to an embodiment, the processor may detect a subject (object) in the designated image (the second preview image 911) and the different image (the third preview image 931), and may re-set the designated image and the different image as the preview image (the designated image) to be displayed through the display. When a subject having a high priority exists in the different image, the processor may update the first graphic effect after inducing the first guide box indicating the location of the designated image (the second preview image 911) on the guide map 914 to move to an area in which the first guide box indicating the location of the different image (the third preview image) is located.

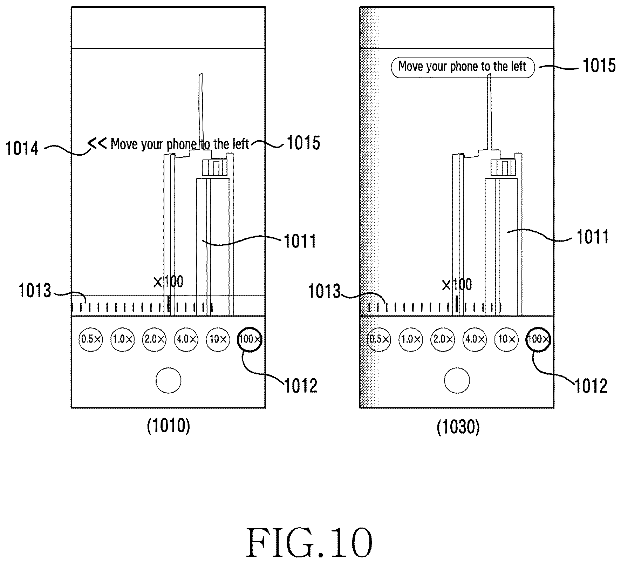

FIG. 10 is a diagram for describing a method of applying a second graphic effect to a display, according to an embodiment of the disclosure.

Referring to FIG. 10, in a state 1010, an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image (e.g., the first preview image 511 of FIG. 5). A processor (e.g., the processor 120 of FIG. 1 or the processor 204 of FIG. 2) of the electronic device may enlarge a second preview image (e.g., the second preview image 532 of FIG. 5), based on one magnification in a plurality of magnification ranges. When the electronic device shakes, the processor may notify that a second preview image 1011 enlarged based on 100.0x magnification is not a preview image originally intended to be enlarged, and may display at least one of a text, an icon, and a second graphic effect to induce a focus to move to an area (a designated image) originally intended to be enlarged.

According to an embodiment, the processor may use a sensor (e.g., the sensor 205 of FIG. 2) to determine whether shaking occurs in the electronic device. The processor may enlarge the first preview image being displayed on the display in a state where the electronic device shakes to the second preview image 1011, based on the 100.0x magnification. The processor may determine that the second preview image 1011 enlarged by the 100.0x magnification is a preview image enlarged in a state where the electronic device shakes to the left by 2mm. The processor may determine that the second preview image 1011 corresponds to an area located at a distance spaced apart by 20cm to the right from a preview image (e.g., a designated image) to be enlarged when there is no shaking in the electronic device.

According to an embodiment, the processor may display a text 1015 notifying that the second preview image 1011 currently displayed on the display is a preview image enlarged by 20cm to the right of the preview image (e.g., the designated image) originally intended to be enlarged. While displaying the text 1015, the processor may display an icon 1014 guiding (inducing) a focus focused on the second preview image 1011 currently displayed on the display to move to a focus indicating an area of the designated image.

In a state 1030, the processor may notify that the second preview image 1011 currently displayed on the display is spaced apart to the right by 20cm from a designated image which is the preview image originally intended to be enlarged, and while displaying the text 1015 inducing the focus to move to the area (the designated image) originally intended to be enlarged, may apply a second graphic effect, which induces a focus of the second preview image 1011 to move to the area (the designated image), to at least some areas of the display. The second graphic effect is a graphic effect applied to at least some areas of the display, and may be a graphic effect which induces the focus of the preview image 1011 currently enlarged in the display to the designated image originally intended to be enlarged.

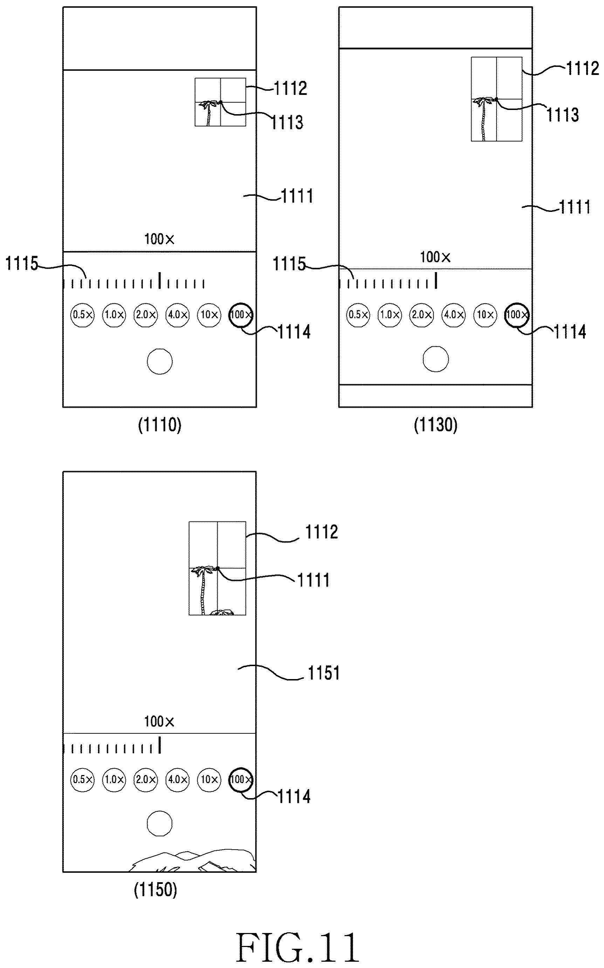

FIG. 11 is a diagram for describing a method of determining a size of a guide map, according to an embodiment of the disclosure.

Referring to FIG. 11, a processor (e.g., the processor 120 of FIG. 1 or the processor 204 of FIG. 2) of an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image 1111.

According to an embodiment, the processor may display a plurality of icons 1114 matched to one of a plurality of magnifications (e.g., the icons 512 matched to at least one of the plurality of magnifications of FIG. 5) on the display, while displaying the first preview image 1111 on the display. When an input occurs on at least one of the icons 1114 matched to the one magnification, the processor may enlarge or reduce the first preview image, in response to the input.

According to an embodiment, the processor may display an object 1115 indicating the plurality of magnifications with a specific interval (e.g., the object 531 indicating the plurality of magnifications with the specific interval of FIG. 5) in at least some areas of the display, while displaying the icons 1114 matched to at least one of the plurality of magnifications. When an input occurs on the object 1115 indicating the plurality of magnifications with the specific interval, the processor may enlarge or reduce the first preview image 1111, in response to the input. In addition, the processor may display a text indicating a numerical value of one of a plurality of magnifications in at least some areas of the display.

In a state 1110, the processor may determine a size and proportion of a guide map 1112 (e.g., the guide map 614 of FIG. 6) displaying the same image as the preview image 1111, according to a resolution (size) of the preview image 1111 displayed on the display. The processor may display a central fixed-type second guide box 1113 (e.g., the second guide box 622 of FIG. 6) located in an area corresponding to a center in the guide map 1112.

In a state 1130, the processor may change the size (resolution) of the preview image 111 displayed on the display. When the size of the preview image 1111 is greater than the size of the preview image 1111 in the state 1110, the processor may change the size and proportion of the guide map 1112 displayed in a designated area of the display, based on the size and proportion of the preview image 1111.

In a state 1150, when the processor changes the size of the preview image displayed on the display to be greater than the preview image 1111 in the state 1130, the processor may change the size of the guide map 1112 displayed in a designated area of the display to be greater than the guide map 1112 in the state 1130.

According to an embodiment, the processor may determine the size of the guide map 1112 displayed in a designated area of the display, based on the preview image 1111 having a resolution of 800 x 600 and displayed in at least some areas of the display. When the resolution of the preview image 1111 having the resolution of 800 x 600 is changed to 1024 x 540, the processor may change the size and proportion of the guide map 1112, based on the changed resolution. In addition, according to a magnification of the enlarged preview image, the guide map 1112 may include at least one of the first guide box (e.g., the first guide box 615 of FIG. 6) and the second guide box 1113 (e.g., the second guide box 631 of FIG. 6).

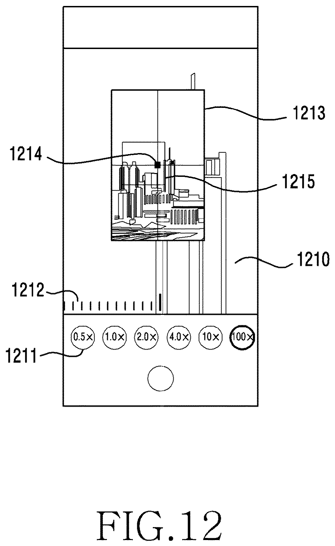

FIG. 12 is a diagram for describing a method of adjusting a size of a guide map, according to an embodiment of the disclosure.

Referring to FIG. 12, a processor (e.g., the processor 120 of FIG. 1 or the processor 204 of FIG. 2) of an electronic device (e.g., the electronic device 101 of FIG. 1 or the electronic device 200 of FIG. 2) may display image data obtained through a camera (e.g., the camera module 180 of FIG. 1 or the camera 202 of FIG. 2) on a display (e.g., the display device 160 of FIG. 1 or the display 201 of FIG. 2) as a first preview image.

According to an embodiment, the processor may display a plurality of icons 1121 matched to one of a plurality of magnifications (e.g., the icons 512 matched to at least one of the plurality of magnifications of FIG. 5) on the display, while displaying the first preview image on the display. When an input occurs on at least one of the icons 1211 matched to the one magnification, the processor may enlarge or reduce the first preview image, in response to the input.

According to an embodiment, the processor may display an object 1212 indicating the plurality of magnifications with a specific interval (e.g., the object 531 indicating the plurality of magnifications with the specific interval of FIG. 5) in at least some areas of the display, while displaying the icons 1211 matched to at least one of the plurality of magnifications. When an input occurs on the object 1212 indicating the plurality of magnifications with the specific interval, the processor may enlarge or reduce the first preview image, in response to the input. In addition, the processor may display a text indicating a numerical value of the first preview image in at least some areas of the display.

According to an embodiment, the processor may detect a user input for controlling the guide map through the electronic device. The processor which has detected the user input may change at least one of a location and size of the guide map, in response to the user input. For example, the processor may receive a drag input for changing the location of the guide map. The processor may change the location of a guide map 1213 displayed in a designated area of the display, in response to the received drag input. In addition, the processor may receive a pinch input for adjusting the size of the guide map. The processor may change the size of the guide map 1213, in response to the received pinch input. The processor may change a size of the same preview image as the first preview image displayed in the guide map 1213 in proportion to the changed size of the guide map 1213.

According to an embodiment, the processor may change the location of the guide map 1213 of which the size has been changed. The processor may display the location of the guide map 1213 of which the size is changed in at least some areas of the display. The processor may enlarge the first preview image with 100.0x magnification and display it as a second preview image 1210 through the display. The processor may display a second guide box 1214 indicating a location of the second preview image 1210 through the guide map 1213.

According to an embodiment, the processor may designate at least some areas of the second preview image 1210 as a designated image to be displayed on the display, based on one of a plurality of magnification ranges. The processor may display on the guide map 1213 a first guide box 1215 indicating a location of the designated image to be displayed on the display and the second guide box 1214 indicating the location of the second preview image 1210 currently displayed on the display.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200) comprising:
a display (160, 201);
a camera module (180, 202);
memory storing instructions; and
a processor (120, 204), wherein the instructions, when executed by the processor, cause the electronic device (101, 200) to:
display, on the display (160, 201), an object (531) indicating a plurality of magnifications;
in case that a magnification associated with the camera module (180, 202) corresponds to 1.0x magnification, display, on the display (160, 201), a preview image obtained through the camera module (180, 202) without displaying a guide map (551, 814);
change the magnification associated with the camera module (180, 202) to a first magnification less than a designated value in a first magnification range in response to a user input on the object (531);
while the magnification associated with the camera module is less than the designated value, display a preview image with the changed first magnification without displaying the guide map (551, 814);
change the magnification associated with the camera module (180, 202) to a second magnification greater than or equal to the designated value in the first magnification range in response to a user input on the object (531);
in response to identifying that the changed second magnification is greater than or equal to the designated value in the first magnification range, display (303), in a designated area of the display (160, 201), the guide map (551, 814) including a guide box (552, 815) indicating a location of a preview image with the changed second magnification on the guide map and the guide box having a size which varies in response to a magnification change in the first magnification range; and
wherein the guide box (552, 815) is fixed to a central area on the guide map (551, 814) while a size of the guide box (552, 815) varies in response to the magnification change in the first magnification range.

2. The electronic device (101, 200) of claim 1, wherein the instructions further cause the electronic device (101, 200) to:
change the magnification associated with the camera module (180, 202) to a third magnification in a second magnification range greater than the first magnification range in response to a user input on the object (531); and
in response to identifying that the changed third magnification is in the second magnification range, display, in the designated area of the display (160, 201), the guide map including a second guide box indicating a location of a preview image with the changed third magnification on the guide map and the second guide box having a size which is fixed in response to a magnification change in the second magnification range.

3. The electronic device (101, 200) of claim 1, wherein the instructions further cause the electronic device (101, 200) to:
while the guide map (551, 814) is displayed in the designated area of the display (160, 201), if the magnification associated with the camera module (180, 202) is reduced to less than the designated value based on a user input on the object, remove display of the guide map (551, 814) from the designated area of the display.

4. The electronic device (101, 200) of claim 1, wherein the instructions further cause the electronic device (101, 200) to:
change in a size and/or proportion of a preview image displayed on the display; and
in response to the change in a size and/or proportion of the preview image, resize a size and/or proportion of the guide map (551, 814) displayed in the designated area, so as to correspond to the changed size and/or proportion of the preview image.

5. The electronic device (101, 200) of claim 1, wherein the instructions further cause the electronic device (101, 200) to:
receive a drag touch input on the display (160, 201) for changing a location of the guide map (551, 814); and
in response to the drag touch input, change the location of the guide map (551, 814).

6. A method of providing a guide map, comprising:
displaying, on a display (160, 201), an object (531) indicating a plurality of magnifications in the display (160, 201);
in case that a magnification associated with the camera module (180, 202) corresponds to 1.0x magnification, displaying, on the display (160, 201), a preview image obtained from a camera module (180, 202) of an electronic device (101, 200) without displaying a guide map (551, 814);
changing the magnification associated with the camera module (180, 202) to a first magnification less than a designated value in a first magnification range in response to a user input on the object (531);
while the magnification associated with the camera module is less than the designated value, displaying a preview image (511) with the changed first magnification without displaying a guide map (551, 814);
changing the magnification associated with the camera module (180, 202) to a second magnification greater than or equal to the designated value in a first magnification range in response to a user input on the object (531);
in response to identifying that the changed second magnification is greater than or equal to the designated value in the first magnification range, displaying (303), in a designated area of the display (160, 201), the guide map (551, 814) including a guide box (552, 815) indicating a location of a preview image with the changed second magnification on the guide map and the guide box having a size which varies in response to a magnification change in the first magnification range; and
wherein the guide box (552, 815) is fixed to a central area on the guide map (551, 814) while a size of the guide box (552, 815) varies in response to the magnification change in the first magnification range.

7. The method of claim 6, further comprising:
changing the magnification associated with the camera module (180, 202) to a third magnification in a second magnification range greater than the first magnification range in response to a user input on the object (531); and
in response to identifying that the changed third magnification is in the second magnification range, displaying (307), in the designated area of the display (160, 201), the guide map including a second guide box indicating a location of a preview image with the changed third magnification on the guide map and the second guide box having a size which is fixed in response to a magnification change in the second magnification range.

8. The method of claim 6, further comprising:
while the guide map (551, 814) is displayed in the designated area of the display (160, 201), if the magnification associated with the camera module (180, 202) is reduced to less than the designated value based on a user input on the object (531), removing display of the guide map from the designated area of the display.

9. The method of claim 6, further comprising:
changing in a size and/or proportion of a preview image displayed on the display; and
in response to the change in a size and/or proportion of the preview image, resizing a size and/or proportion of the guide map (551, 814) displayed in the designated area, so as to correspond to the changed size and/or proportion of the preview image.

10. The method of claim 6, further comprising:
receiving a drag touch input on the display (160, 201) for changing a location of the guide map (551, 814); and
in response to the drag touch input, changing the location of the guide map (551, 814).

## Patentansprüche

1. Elektronische Vorrichtung (101, 200), umfassend:
eine Anzeige (160, 201);
ein Kameramodul (180, 202);
Speicher, der Anweisungen speichert; und
einen Prozessor (120, 204), wobei die Anweisungen, wenn durch den Prozessor ausgeführt, die elektronische Vorrichtung (101, 200) zu Folgendem veranlassen:
Anzeigen, auf der Anzeige (160, 201), eines Objekts (531), das eine Vielzahl von Vergrößerungen angibt;
falls eine Vergrößerung assoziiert mit dem Kameramodul (180, 202) 1,0x Vergrößerung entspricht, Anzeigen, auf der Anzeige (160, 201), eines Vorschaubildes, das durch das Kameramodul (180, 202) erhalten wird, ohne eine Führungskarte (551, 814) anzuzeigen;
Ändern der Vergrößerung assoziiert mit dem Kameramodul (180, 202) auf eine erste Vergrößerung, die weniger als ein benannter Wert in einer ersten Vergrößerungsspanne ist, als Reaktion auf eine Benutzereingabe auf dem Objekt (531);
während die Vergrößerung assoziiert mit dem Kameramodul weniger als der benannte Wert ist, Anzeigen eines Vorschaubildes mit der geänderten ersten Vergrößerung, ohne die Führungskarte (551, 814) anzuzeigen;
Ändern der Vergrößerung assoziiert mit dem Kameramodul (180, 202) auf eine zweite Vergrößerung, die größer als oder gleich dem benannten Wert in der ersten Vergrößerungsspanne ist, als Reaktion auf eine Benutzereingabe auf dem Objekt (531);
als Reaktion auf das Identifizieren, dass die geänderte zweite Vergrößerung größer als oder gleich dem benannten Wert in der ersten Vergrößerungsspanne ist, Anzeigen (303), in einem benannten Bereich der Anzeige (160, 201), der Führungskarte (551, 814), beinhaltend einen Führungskasten (552, 815), der eine Lage eines Vorschaubildes mit der geänderten zweiten Vergrößerung auf der Führungskarte angibt, und wobei der Führungskasten eine Größe aufweist, die als Reaktion auf eine Vergrößerungsänderung in der ersten Vergrößerungsspanne variiert; und
wobei der Führungskasten (552, 815) an einem zentralen Bereich auf der Führungskarte (551, 814) fixiert ist, während eine Größe des Führungskastens (552, 815) als Reaktion auf die Vergrößerungsänderung in der ersten Vergrößerungsspanne variiert.

2. Elektronische Vorrichtung (101, 200) nach Anspruch 1, wobei die Anweisungen ferner die elektronische Vorrichtung (101, 200) zu Folgendem veranlassen:
Ändern der Vergrößerung assoziiert mit dem Kameramodul (180, 202) auf eine dritte Vergrößerung in einer zweiten Vergrößerungsspanne, die größer als die erste Vergrößerungsspanne ist, als Reaktion auf eine Benutzereingabe auf dem Objekt (531); und
als Reaktion auf das Identifizieren, dass die geänderte dritte Vergrößerung in der zweiten Vergrößerungsspanne ist, Anzeigen, in dem benannten Bereich der Anzeige (160, 201), der Führungskarte, beinhaltend einen zweiten Führungskasten, der eine Lage eines Vorschaubildes mit der geänderten dritten Vergrößerung auf der Führungskarte angibt, und wobei der zweite Führungskasten eine Größe aufweist, die als Reaktion auf eine Vergrößerungsänderung in der zweiten Vergrößerungsspanne fixiert ist.

3. Elektronische Vorrichtung (101, 200) nach Anspruch 1, wobei die Anweisungen ferner die elektronische Vorrichtung (101, 200) zu Folgendem veranlassen:
während die Führungskarte (551, 814) in dem benannten Bereich der Anzeige (160, 201) angezeigt wird, wenn die Vergrößerung assoziiert mit dem Kameramodul (180, 202) auf weniger als den benannten Wert basierend auf einer Benutzereingabe auf dem Objekt reduziert wird, Entfernen von Anzeige der Führungskarte (551, 814) von dem benannten Bereich der Anzeige.

4. Elektronische Vorrichtung (101, 200) nach Anspruch 1, wobei die Anweisungen ferner die elektronische Vorrichtung (101, 200) zu Folgendem veranlassen:
Ändern einer Größe und/oder eines Anteils eines Vorschaubildes, das auf der Anzeige angezeigt wird; und
als Reaktion auf das Ändern einer Größe und/oder eines Anteils des Vorschaubildes, Größenanpassen einer Größe und/oder eines Anteils der Führungskarte (551, 814), die in dem benannten Bereich angezeigt wird, um der geänderten Größe und/oder dem geänderten Anteil des Vorschaubildes zu entsprechen.

5. Elektronische Vorrichtung (101, 200) nach Anspruch 1, wobei die Anweisungen ferner die elektronische Vorrichtung (101, 200) zu Folgendem veranlassen:
Empfangen einer Ziehberührungseingabe auf der Anzeige (160, 201) zum Ändern einer Lage der Führungskarte (551, 814); und
als Reaktion auf die Ziehberührungseingabe, Ändern der Lage der Führungskarte (551, 814).

6. Verfahren zum Bereitstellen einer Führungskarte, umfassend:
Anzeigen, auf einer Anzeige (160, 201), eines Objekts (531), das eine Vielzahl von Vergrößerungen in der Anzeige (160, 201) angibt;
falls eine Vergrößerung assoziiert mit dem Kameramodul (180, 202) 1,0x Vergrößerung entspricht, Anzeigen, auf der Anzeige (160, 201), eines Vorschaubildes, das von einem Kameramodul (180, 202) einer elektronischen Vorrichtung (101, 200) erhalten wird, ohne eine Führungskarte (551, 814) anzuzeigen;
Ändern der Vergrößerung assoziiert mit dem Kameramodul (180, 202) auf eine erste Vergrößerung, die weniger als ein benannter Wert in einer ersten Vergrößerungsspanne ist, als Reaktion auf eine Benutzereingabe auf dem Objekt (531);
während die Vergrößerung assoziiert mit dem Kameramodul weniger als der benannte Wert ist, Anzeigen eines Vorschaubildes (511) mit der geänderten ersten Vergrößerung, ohne eine Führungskarte (551, 814) anzuzeigen;
Ändern der Vergrößerung assoziiert mit dem Kameramodul (180, 202) auf eine zweite Vergrößerung, die größer als oder gleich dem benannten Wert in einer ersten Vergrößerungsspanne ist, als Reaktion auf eine Benutzereingabe auf dem Objekt (531);
als Reaktion auf das Identifizieren, dass die geänderte zweite Vergrößerung größer als oder gleich dem benannten Wert in der ersten Vergrößerungsspanne ist, Anzeigen (303), in einem benannten Bereich der Anzeige (160, 201), der Führungskarte (551, 814), beinhaltend einen Führungskasten (552, 815), der eine Lage eines Vorschaubildes mit der geänderten zweiten Vergrößerung auf der Führungskarte angibt, und wobei der Führungskasten eine Größe aufweist, die als Reaktion auf eine Vergrößerungsänderung in der ersten Vergrößerungsspanne variiert; und
wobei der Führungskasten (552, 815) an einem zentralen Bereich auf der Führungskarte (551, 814) fixiert ist, während eine Größe des Führungskastens (552, 815) als Reaktion auf die Vergrößerungsänderung in der ersten Vergrößerungsspanne variiert.

7. Verfahren nach Anspruch 6, ferner umfassend:
Ändern der Vergrößerung assoziiert mit dem Kameramodul (180, 202) auf eine dritte Vergrößerung in einer zweiten Vergrößerungsspanne, die größer als die erste Vergrößerungsspanne ist, als Reaktion auf eine Benutzereingabe auf dem Objekt (531); und
als Reaktion auf das Identifizieren, dass die geänderte dritte Vergrößerung in der zweiten Vergrößerungsspanne ist, Anzeigen (307), in dem benannten Bereich der Anzeige (160, 201), der Führungskarte, beinhaltend einen zweiten Führungskasten, der eine Lage eines Vorschaubildes mit der geänderten dritten Vergrößerung auf der Führungskarte angibt, und wobei der zweite Führungskasten eine Größe aufweist, die als Reaktion auf eine Vergrößerungsänderung in der zweiten Vergrößerungsspanne fixiert ist.

8. Verfahren nach Anspruch 6, ferner umfassend:
während die Führungskarte (551, 814) in dem benannten Bereich der Anzeige (160, 201) angezeigt wird, wenn die Vergrößerung assoziiert mit dem Kameramodul (180, 202) auf weniger als den benannten Wert basierend auf einer Benutzereingabe auf dem Objekt (531) reduziert wird, Entfernen von Anzeige der Führungskarte von dem benannten Bereich der Anzeige.

9. Verfahren nach Anspruch 6, ferner umfassend:
Ändern einer Größe und/oder eines Anteils eines Vorschaubildes, das auf der Anzeige angezeigt wird; und
als Reaktion auf das Ändern einer Größe und/oder eines Anteils des Vorschaubildes, Größenanpassen einer Größe und/oder eines Anteils der Führungskarte (551, 814), die in dem benannten Bereich angezeigt wird, um der geänderten Größe und/oder dem geänderten Anteil des Vorschaubildes zu entsprechen.

10. Verfahren nach Anspruch 6, ferner umfassend:
Empfangen einer Ziehberührungseingabe auf der Anzeige (160, 201) zum Ändern einer Lage der Führungskarte (551, 814); und
als Reaktion auf die Ziehberührungseingabe, Ändern der Lage der Führungskarte (551, 814).

## Revendications

1. Dispositif électronique (101, 200) comprenant :
un affichage (160, 201) ;
un module de caméra (180, 202) ;
une mémoire stockant des instructions ; et
un processeur (120, 204), dans lequel les instructions, lorsqu'elles sont exécutées par le processeur, amènent le dispositif électronique (101, 200) à :
afficher, sur l'affichage (160, 201), un objet (531) indiquant une pluralité de grossissements ;
dans le cas où un grossissement associé au module de caméra (180, 202) correspond à un grossissement de 1,0x, afficher, sur l'affichage (160, 201), une image d'aperçu obtenue par le biais du module de caméra (180, 202) sans afficher de carte de guidage (551, 814) ;
changer le grossissement associé au module de caméra (180, 202) en un premier grossissement inférieur à une valeur désignée dans une première plage de grossissements en réponse à une entrée d'utilisateur sur l'objet (531) ;
tandis que le grossissement associé au module de caméra est inférieur à la valeur désignée, afficher une image d'aperçu avec le premier grossissement modifié sans afficher la carte de guidage (551, 814) ;
changer le grossissement associé au module de caméra (180, 202) en un deuxième grossissement supérieur ou égal à la valeur désignée dans la première plage de grossissements en réponse à une entrée d'utilisateur sur l'objet (531) ;
en réponse à l'identification que le deuxième grossissement modifié est supérieur ou égal à la valeur désignée dans la première plage de grossissements, afficher (303), dans une zone désignée de l'affichage (160, 201), la carte de guidage (551, 814) comprenant un cadre de guidage (552, 815) indiquant un emplacement d'une image d'aperçu avec le deuxième grossissement modifié sur la carte de guidage et le cadre de guidage ayant une taille qui varie en réponse à un changement de grossissement dans la première plage de grossissements ; et
dans lequel le cadre de guidage (552, 815) est fixe par rapport à une zone centrale sur la carte de guidage (551, 814) tandis qu'une taille du cadre de guidage (552, 815) varie en réponse au changement de grossissement dans la première plage de grossissements.

2. Dispositif électronique (101, 200) selon la revendication 1, dans lequel les instructions amènent en outre le dispositif électronique (101, 200) à :
changer le grossissement associé au module de caméra (180, 202) en un troisième grossissement dans une deuxième plage de grossissements supérieure à la première plage de grossissements en réponse à une entrée d'utilisateur sur l'objet (531) ; et
en réponse à l'identification que le troisième grossissement modifié se situe dans la deuxième plage de grossissements, afficher, dans la zone désignée de l'affichage (160, 201), la carte de guidage comprenant un deuxième cadre de guidage indiquant un emplacement d'une image d'aperçu avec le troisième grossissement modifié sur la carte de guidage et le deuxième cadre de guidage ayant une taille qui est fixe en réponse à un changement de grossissement dans la deuxième plage de grossissements.

3. Dispositif électronique (101, 200) selon la revendication 1, dans lequel les instructions amènent en outre le dispositif électronique (101, 200) à :
tandis que la carte de guidage (551, 814) est affichée dans la zone désignée de l'affichage (160, 201), si le grossissement associé au module de caméra (180, 202) est réduit à moins que la valeur désignée sur la base d'une entrée d'utilisateur sur l'objet, supprimer l'affichage de la carte de guidage (551, 814) de la zone désignée de l'affichage.

4. Dispositif électronique (101, 200) selon la revendication 1, dans lequel les instructions amènent en outre le dispositif électronique (101, 200) à :
changer une taille et/ou une proportion d'une image d'aperçu affichée sur l'affichage ; et
en réponse au changement d'une taille et/ou d'une proportion de l'image d'aperçu, redimensionner une taille et/ou une proportion de la carte de guidage (551, 814) affichée dans la zone désignée, de manière à correspondre à la taille et/ou la proportion modifiée de l'image d'aperçu.

5. Dispositif électronique (101, 200) selon la revendication 1, dans lequel les instructions amènent en outre le dispositif électronique (101, 200) à :
recevoir une entrée tactile de glissement sur l'affichage (160, 201) pour modifier un emplacement de la carte de guidage (551, 814) ; et
en réponse à l'entrée tactile de glissement, changer l'emplacement de la carte de guidage (551, 814).

6. Procédé de fourniture d'une carte de guidage, comprenant :
l'affichage, sur un affichage (160, 201), d'un objet (531) indiquant une pluralité de grossissements dans l'affichage (160, 201) ;
dans le cas où un grossissement associé au module de caméra (180, 202) correspond à un grossissement de 1,0x, l'affichage, sur l'affichage (160, 201), d'une image d'aperçu obtenue par le biais d'un module de caméra (180, 202) d'un dispositif électronique (101, 200) sans afficher de carte de guidage (551, 814) ;
le changement du grossissement associé au module de caméra (180, 202) en un premier grossissement inférieur à une valeur désignée dans une première plage de grossissement en réponse à une entrée d'utilisateur sur l'objet (531) ;
tandis que le grossissement associé au module de caméra est inférieur à la valeur désignée, l'affichage d'une image d'aperçu (511) avec le premier grossissement modifié sans afficher de carte de guidage (551, 814) ;
le changement du grossissement associé au module de caméra (180, 202) en un deuxième grossissement supérieur ou égal à la valeur désignée dans une première plage de grossissements en réponse à une entrée d'utilisateur sur l'objet (531) ;
en réponse à l'identification que le deuxième grossissement modifié est supérieur ou égal à la valeur désignée dans la première plage de grossissements, l'affichage (303), dans une zone désignée de l'affichage (160, 201), de la carte de guidage (551, 814) comprenant un cadre de guidage (552, 815) indiquant un emplacement d'une image d'aperçu avec le deuxième grossissement modifié sur la carte de guidage et le cadre de guidage ayant une taille qui varie en réponse à un changement de grossissement dans la première plage de grossissement ; et
dans lequel le cadre de guidage (552, 815) est fixe par rapport à une zone centrale sur la carte de guidage (551, 814) tandis qu'une taille du cadre de guidage (552, 815) varie en réponse au changement de grossissement dans la première plage de grossissements.

7. Procédé selon la revendication 6, comprenant en outre :
le changement du grossissement associé au module de caméra (180, 202) en un troisième grossissement dans une deuxième plage de grossissement supérieure à la première plage de grossissement en réponse à une entrée d'utilisateur sur l'objet (531) ; et
en réponse à l'identification que le troisième grossissement modifié se situe dans la deuxième plage de grossissements, l'affichage (307), dans la zone désignée de l'affichage (160, 201), de la carte de guidage comprenant un deuxième cadre de guidage indiquant un emplacement d'une image de prévisualisation avec le troisième grossissement modifié sur la carte de guidage et le deuxième cadre de guidage ayant une taille qui est fixe en réponse à un changement de grossissement dans la deuxième plage de grossissements.

8. Procédé selon la revendication 6, comprenant en outre :
tandis que la carte de guidage (551, 814) est affichée dans la zone désignée de l'affichage (160, 201), si le grossissement associé au module de caméra (180, 202) est réduit à moins que la valeur désignée sur la base d'une entrée d'utilisateur sur l'objet (531), la suppression de l'affichage de la carte de guidage de la zone désignée de l'affichage.

9. Procédé selon la revendication 6, comprenant en outre :
le changement d'une taille et/ou d'une proportion d'une image d'aperçu affichée sur l'affichage ; et
en réponse au changement d'une taille et/ou d'une proportion de l'image d'aperçu, le redimensionnement d'une taille et/ou d'une proportion de la carte de guidage (551, 814) affichée dans la zone désignée, de manière à correspondre à la taille et/ou à la proportion modifiée de l'image d'aperçu.

10. Procédé selon la revendication 6, comprenant en outre :
la réception d'une entrée tactile de glissement sur l'affichage (160, 201) pour modifier un emplacement de la carte de guidage (551, 814) ; et
en réponse à l'entrée tactile de glissement, le changement de l'emplacement de la carte de guidage (551, 814).
